# EUROPEAN PATENT SPECIFICATION

(11) **EP 4 342 307 B1**
(45) Date of publication and mention of the grant of the patent: **04.11.2026**
(21) Application number: 22306421.3
(22) Date of filing: 26.09.2022
(51) Int. Cl.: A23L 7/17, A23J 3/22, A23J 3/26, A23L 33/185

(54) **TEXTURED COMPOSITION COMPRISING PLANT PROTEINS AND HIGH AMYLOSE STARCH, METHOD FOR PREPARING SAME AND USE THEREOF**
TEXTURIERTE ZUSAMMENSETZUNG MIT PFLANZENPROTEINEN UND STÄRKE MIT HOHEM AMYLOSEGEHALT, VERFAHREN ZUR HERSTELLUNG DAVON UND VERWENDUNG DAVON
COMPOSITION TEXTURÉE COMPRENANT DES PROTÉINES VÉGÉTALES ET DE L'AMIDON À HAUTE TENEUR EN AMYLOSE, SON PROCÉDÉ DE PRÉPARATION ET SON UTILISATION

(43) Date of publication of application: 27.03.2024
(73) Proprietor: ROQUETTE FRERES, 62136 Lestrem (FR)
(72) Inventor: KANTT, Carlos, NORTH AURORA, 60542 (US); PERERA, Chandani, BATAVIA, 60510 (US)
(74) Representative: Roquette IP International

(56) References cited:
- EP-A1- 4 193 844
- CA-A- 1 118 270
- US-A1- 2013 071 491
- SUSAN ARNTFIELD HEATHER MASKUS: "Extrusion Processing and Evaluation of an Expanded, Puffed Pea Snack Product", JOURNAL OF NUTRITION & FOOD SCIENCES, vol. 05, no. 04, 1 January 2015 (2015-01-01), XP093027549, DOI: 10.4172/2155-9600.1000378
- SALDANHA DO CARMO CÁTIA ET AL: "The impact of extrusion parameters on physicochemical, nutritional and sensorial properties of expanded snacks from pea and oat fractions", LWT- FOOD SCIENCE AND TECHNOLOGY, ACADEMIC PRESS, UNITED KINGDOM, vol. 112, 1 September 2019 (2019-09-01), XP085733613, ISSN: 0023-6438, [retrieved on 20190608], DOI: 10.1016/J.LWT.2019.108252
- JEBALIA I ET AL: "Morphology and mechanical behaviour of pea-based starch-protein composites obtained by extrusion", CARBOHYDRATE POLYMERS, APPLIED SCIENCE PUBLISHERS , LTD BARKING, GB, vol. 223, 15 July 2019 (2019-07-15), XP085776352, ISSN: 0144-8617, [retrieved on 20190715], DOI: 10.1016/J.CARBPOL.2019.115086
- ANONYMOUS: "HYLON® VII by Ingredion - Food, Beverage & Nutrition", 2 February 2018 (2018-02-02), pages 1 - 2, XP055447213, Retrieved from the Internet <URL:https://www.ulprospector.com/en/na/Food/Detail/12852/366827/HYLON-VII> [retrieved on 20180202]
- CORNET STEVEN H. V. ET AL: "Thermo-mechanical processing of plant proteins using shear cell and high-moisture extrusion cooking", CRITICAL REVIEWS IN FOOD SCIENCE AND NUTRITION, vol. 62, no. 12, 6 January 2021 (2021-01-06), USA, pages 3264 - 3280, XP055975776, ISSN: 1040-8398, DOI: 10.1080/10408398.2020.1864618

## Description

The present invention relates to a specific textured composition comprising plant protein-rich material, preferably pea protein-rich material, and high amylose starch. The invention also relates to its method for the production thereof and to the use thereof.

The technique for texturing proteins, especially by extrusion cooking, with the aim of preparing products with a fibrous structure intended for producing meat and fish analogs, has been applied to numerous plant sources.

The extrusion cooking processes for proteins can be separated into two large families by the amount of water used in the process. When this amount is greater than 30% by weight, this will be referred to as "wet" extrusion cooking, and the products obtained will be more intended for producing finished products for immediate consumption that simulate animal meat, for example, beef steaks or chicken nuggets. For example, patent application WO 2014/081285 is known, which discloses a method for extruding a mixture of protein and fibers using a cooling die typical of wet extrusion. The present invention is in the field of dry extrusion.

When this amount of water is less than 30% by weight, this is then referred to as "dry" extrusion cooking: the products obtained are more intended to be used by food-processing manufacturers, in order to formulate meat substitutes by mixing them with other ingredients. The field of the present invention is that of "dry" extrusion cooking.

Historically, the first proteins used as meat analogs were extracted from soybean and wheat. Soybean subsequently quickly became the main source for this field of applications.

While most of the studies that followed obviously related to soybean proteins, other sources of protein, both animal and plant, have been textured: peanut, sesame, cottonseed, sunflower, corn, wheat proteins, proteins derived from microorganisms, by-products from abattoirs or the fisheries industry.

Leguminous proteins, such as those derived from pea and faba bean, have also been the subject of work, both in terms of the isolation thereof and in terms of the "dry" extrusion cooking thereof.

Numerous studies have been undertaken on leguminous and especially pea proteins given their particular functional and nutritional properties but also because of their non-genetically-modified nature.

Despite significant research efforts and increasing growth over recent years, the penetration of these products based on textured proteins on the food market is still subject to optimization.

One of the reasons particularly lies in the necessary process for rehydrating textured pea proteins before formulating them.

Indeed, since said proteins are dry, they must be rehydrated in order to be able to shape them and intimately mix them with other constituents of the formulation in order to obtain a satisfactory end result.

This rehydration often leads to a decrease in the organoleptic result as consumers found while consuming it a lack of firmness.

In order to overcome this problem, a potential solution involves decreasing the water holding capacity (WHC). Water holding capacity can be defined by the quantity of water that can be absorbed by a defined quantity of textured proteins in defined conditions. The more water absorbed, the less firm final product will be.

To reduce WHC, a main action is to rise density. While this solution works, it is not fully satisfactory as more water is needed in the process and/or more matter is needed for a same volume.

It is to the Applicant's credit that they have solved the above problems and have developed a new specific textured composition comprising plant proteins and high amylose starch, obtained by extrusion cooking in a dry process which allows a reduction of WHC while keeping density at same level.

As taught in *"*Textured vegetable proteins (TVP): Future foods standing on their merits as meat alternatives" (Baune & al., 2022), use of starch in this technical field is not obvious as *"*Increasing wheat starch concentrations decreased both, fibre structure as well as hardness and chewiness of the final products (Zhang et al., 2020*b)".* The person skilled in the art would then not have selected starch in order to solve these problems. US 2013/071491 is directed to an extrusion process for producing an expanded food product containing yeast autolysate. Heather Maskus (Journal of Nutrition & Food Sciences 2015) is a scientific article disclosing a study on an aerated snack food made entirely from pea-based ingredients.Saldanha do Carmo et al. (Food Science and Technology 2019) is a scientific article disclosing a study on the impact of extruder process parameters on snack quality using pea and oat-rich fractions enriched in starch, protein and fiber.Jebalia et al. (Carbohydrate Polymers 2019) is a scientific article disclosing a study on the relationship between morphological features and mechanical properties for legume composites. CA 1 118 270 aims at preparing pea protein concentrates in forms which are essentially bland in flavour, with no bitter taste, for use in various food products.

This invention will be better understood in the following section which aims to disclose a general description thereof. The invention is as defined in the appended claims.

### GENERAL DESCRIPTION OF THE PRESENT INVENTION

The present invention relates to an extruded composition comprising plant protein-rich material and starch, said starch having an amylose content ranging from 50% to 90% by weight relative to the total weight of the starch.

The plant protein-rich material is selected from the list made up of faba bean and pea. Pea is particularly preferred.

The protein content of the claimed composition ranges from 50% to 75%, preferably from 65% to 75% by dry weight relative to the total weight of dry matter of the composition.

Finally, percentage of the dry matter of the plant protein textured in a dry process according to the invention is preferably more than 80% by weight relative to the total weight of the textured plant protein, preferably more than 90% by weight, preferably from 90% to 95%.

The present invention also relates to a method for producing an extruded composition of the invention as indicated above, wherein the extruded protein composition has a protein content ranging from 50% to 75% by dry weight relative to the total weight of dry matter of the composition, said method comprising the following steps:
1) providing a powder comprising plant protein-rich material and starch having amylose content ranging from **50%** to 90% by weight relative to the total weight of the starch, said powder having a dry weight ratio of plant proteins to starch ranging from 70/30 to 90/10, preferably from 85/15 to 90/10;
2) extrusion cooking the powder with water, the water to powder mass ratio before cooking ranging from 1% to 40%, preferably from 10% to 30%, even more preferably from 15% to 25%;
3) cutting the extruded composition at the extruder outlet;
4) drying the extruded composition thus obtained.

The plant protein-rich material is selected from the list comprising faba beans and peas, preferably a pea protein.

Preferably, the starch having amylose content ranging from 50% to 90% by weight relative to the total weight of the starch, is selected from the list comprising pea starch and amylomaize starch, preferably pea starch.

Preferably, step 2 is carried out by extrusion cooking in a twin-screw extruder characterized by a length to diameter ratio ranging from 20 to 60, preferably from 30 to 50, preferably from 35 to 45, and equipped with 85-95% feeding elements, 2.5-10% kneading elements, and 2.5-10% reverse pitch elements.

Even more preferably, a specific mechanical energy ranging from 700 to 800 kj/kg is applied to the powder mixture during the extrusion cooking.

Even more preferably, the output of the twin-screw extruder is made up of an output die with holes with a diameter of 1.5 mm and with a knife, the speed of rotation of which ranges from 800 to 1,200 revolutions per minute, preferably from 900 to 1,100 revolutions per minute, preferably 1,000 revolutions per minute.

Finally, the present invention relates to the use of the composition of the invention as indicated above in industrial applications such as, for example, the human and animal food industry, industrial pharmaceuticals or cosmetics.

Preferably, the industrial applications are selected in the list including meat analogs, fish analogs, inclusions for bakery.

The present invention will be better understood upon reading the following detailed description.

### DETAILED DESCRIPTION OF THE PRESENT INVENTION

The present invention relates to an extruded protein composition comprising plant protein-rich material and starch, said starch having an amylose content ranging from 50% to 90% by weight relative to the total weight of the starch.

The plant protein-rich material is selected from faba bean protein and pea protein. Pea protein is particularly preferred.

The term "leguminous" is considered herein to mean the family of dicotyledonous plants of the order Fabales. This is one of the largest flowering plant families, third after Orchidaceae and Asteraceae in terms of number of species. It contains approximately 765 genera, bringing together more than 19,500 species. Several leguminous plants are important crop plants, including soybean, beans, peas, faba beans, chickpeas, peanuts, cultivated lentils, cultivated alfalfa, various clovers, broad beans, carob and licorice.

The term "pea" is considered here in its broadest accepted use and includes in particular all the varieties of *"smooth pea"* and *"wrinkled pea"* and all the mutant varieties of *"smooth pea"* and *"wrinkled pea",* regardless of the uses for which said varieties are usually intended (human food, animal feed and/or other uses).

The term "pea" in the present application includes pea varieties belonging to the *Pisum* genus and more specifically to the *sativum* and *aestivum* species. Said mutant varieties are in particular those called "mutants r", "mutants rb", "mutants rug 3", "mutants rug 4", "mutants rug 5" and "mutants lam" as described in the article by C-L HEYDLEY et al., entitled "Developing novel pea starches", Proceedings of the Symposium of the Industrial Biochemistry and Biotechnology Group of the Biochemical Society, 1996, pp. 77-87.

If the leguminous proteins, in particular derived from faba beans and peas, are particularly adapted to the design of the invention, it is nevertheless possible to achieve the latter with other sources of plant proteins such as oat, mung bean, potato, corn or even chickpea protein. A person skilled in the art will know how to make any necessary adjustments.

"Starch" is understood to mean any compositions mainly comprising two polymers, amylose and amylopectin. Amylose is the fraction containing linear homopolymers of α-1,4-linked glucose and a few α-1,6 branch points. Amylopectin, on the other hand, is the branched fraction, consisting of linear α-1,4 glucose chains linked to other linear α-1,4 glucose chains by α-1,6 branch points.

Starch for the invention will be selected to have an amylose content comprised from 50% to 90% by weight based on total starch weight.

The amylose content ranges from 50% to 90% by weight relative to the total weight of the starch. To be more precise, amylose content is selected from 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89% and 90% by weight relative to the total weight of the starch. Such values are commonly found in high amylose maize based starch which is then preferred. Commercial example of such starch is, for example, Eurylon 7 or N-400 produced by Roquette. Products obtained with such starch lead to a better organoleptic performance when consumed.

"Extruded", "Textured" or "texturing" in the present application is understood to mean any physical and/or chemical process that aims at modifying a composition comprising proteins in order to give it a specific ordered structure. Within the scope of the invention, texturing proteins aims to give the appearance of a fiber, such as those present in animal meats. As will be described throughout the remainder of this description, a particularly preferred method for texturing proteins is extrusion cooking, particularly using a twin-screw extruder.

Preferably, the composition of the invention possesses a water holding capacity, measured by the following Test A, below 2,7; preferably below 2,5; preferably below 2,3; preferably below 2,2

In order to measure the water holding capacity, test A is used, the protocol of which is described below:
a. weighing a 20 g sample to be analyzed in a beaker;
b. adding drinking water at room temperature (temperature from 10°C to 20°C, preferably 20°C +/- 1°C) until the sample is completely submerged;
c. leaving in static contact for 30 minutes;
d. leaving to drain;
e. separating the residual water and the sample using a sieve;
f. weighing the final weight P of the rehydrated sample.

The computation for water holding capacity, expressed as grams of water per gram of protein analyzed, is as follows: $Water holding capacity = \left(P-20\right) / 20 .$

"Drinking water" is understood to mean water that can be drunk or used for domestic and industrial purposes without posing health risks. Preferably, its conductivity is selected from 400 to 1,100, preferably from 400 to 600 µS/cm. More preferably in the present invention, it will be understood that this drinking water has a sulfate content of less than 250 mg/l, a chloride content of less than 200 mg/l, a potassium content of less than 12 mg/l, a pH ranging from 6.5 to 9 and a total hardness (TH, namely the hardness of the water, corresponding to the measurement of the calcium and magnesium ions content in water) of more than 15 French degrees. In other words, drinking water must not have less than 60 mg/l of calcium or 36 mg/l of magnesium.

Preferably, the composition of the invention possesses a bulk density, measured by the following Test B ranging from 90 g/L to 120 g/L; preferably from 100 g/L to 115 g/L; preferably from 105 g/L to 115 g/L

In order to measure the bulk density, test B is used, the protocol of which is described below:
a. taring a 2-liter graduated test tube;
b. filling the test tube with the product to be analyzed, until the 2-liter graduation is reached;
c. weighing the product (Weight P, in grams).

The computation of the bulk density expressed in g/l is as follows: $Bulk density = \left(P\left(g\right)/2\right) .$

Finally, the dry matter content of the composition comprising plant protein-rich material textured in a dry process according to the invention is more than 80%, preferably more than 90%, more preferably from 90% to 95% by weight relative to the total weight of said composition.

The percentage of dry matter is measured using any method that is well known to a person skilled in the art. Preferably, the "desiccation" method is used. It involves determining the amount of water evaporated by heating a known amount of a sample of known mass. Heating is continued until the mass stabilizes, indicating that the water has evaporated completely. Preferably, the temperature used is 105°C.

The protein content of the composition according to the invention ranges from 50% to 75%, preferably from 65% to 75% by dry weight relative to the total weight of dry matter of the composition. Any method well known to a person skilled in the art can be used to analyze this protein content. Preferably, the total nitrogen amount will be assayed and this content will be multiplied by the coefficient 6.25. This method is particularly known and used for plant proteins.

The present invention also relates to a method for producing an extruded protein composition as indicated above, wherein the extruded protein composition has a protein content ranging from 50% to 75% by dry weight relative to the total weight of dry matter of the composition, the said method comprising the following steps:
1) providing a powder comprising plant protein-rich material, preferably leguminous proteins, preferably pea proteins and starch having amylose content comprised from **50%** to 90% by weight relative to the total weight of the starch, said powder having a dry weight ratio of plant proteins to starch ranging from 70/30 to 90/10, preferably from 85/15 to 90/10;
2) extrusion cooking the powder with water, the water to powder mass ratio before cooking ranging from 10% to 30%, preferably from 12.5% to 25.5%, even more preferably from 15% to 20%;
3) drying the composition thus obtained.

**The** plant protein-rich material of step 1 is selected from faba bean protein and pea protein. Pea protein is particularly preferred.

The powder comprising the plant protein-rich material and starch having amylose content comprised from 50% to 90% by weight relative to the total weight of the starch used in step 1 can be prepared by mixing said protein-rich material and starch. The powder can essentially consist of plant protein-rich material and starch having amylose content comprised from **50%** to 90% by weight relative to the total weight of the starch. The term "essentially consist of" means that the powder can comprise impurities associated with the method for producing the protein-rich material and the starch, for example, traces of salt or oligosaccharides.

Preferably, the plant protein-rich material, preferably pea proteins is characterized by a protein content advantageously ranging from 60% to 90%, preferably from 70% to 85%, even more preferably from 75% to 85% by dry weight relative to the total weight of dry matter of the plant protein-rich material. Any method well known to a person skilled in the art can be used to analyze this protein content. Preferably, the total nitrogen amount will be assayed and this content will be multiplied by the coefficient 6.25. This method is particularly known and used for plant proteins. Preferably, dry matter content of the plant protein-rich material is more than 80%, preferably more than 90% by weight relative to the total weight of said plant protein-rich material.

Even more preferably, the proteins are characterized by a particle size characterized by a Dmode ranging from 150 microns to 400 microns, preferably from 150 microns to 200 microns or from 350 microns to 450 microns. The measurement of this particle size is carried out using a MALVERN 3000 laser particle size analyzer in the dry phase (equipped with a powder module). The powder is placed in the feeder for the module with an opening ranging between 1 and 4 mm and a vibration frequency of 50% or 75%. The device automatically records the various sizes and adjusts the Particle Size Distribution (or PSD) as well as the Dmode, D10, D50 and D90. The Dmode is well known to a person skilled in the art and consists of the size of the largest population of particles.

The particle size of the powder is advantageous for the stability and the productivity of the method. An excessively fine particle size is irrevocably followed by problems that are sometimes difficult to manage during the extrusion method.

"Starch" is understood to mean any compositions mainly comprising two polymers, amylose and amylopectin. Amylose is the fraction containing linear homopolymers of α-1,4-linked glucose and a few α-1,6 branch points. Amylopectin, on the other hand, is the branched fraction, consisting of linear α-1,4 glucose chains linked to other linear α-1,4 glucose chains by α-1,6 branch points.

Starch for the invention will be selected to have an amylose content ranging from 50% to 90% by weight based on total starch weight.

**The** amylose content of the starch ranges from 50% to 90% by weight relative to the total weight of the starch. To be more precise, amylose content is selected from 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89% and 90% by weight relative to the total weight of the starch. Such values are commonly found in high amylose maize based starch which is then preferred. Commercial example of such starch is, for example, Eurylon 7 or N-400 produced by Roquette. Products obtained with such starch lead to better organoleptic performance when consumed.

The mixing can be carried out upstream using a dry mixer or even directly as a feed from step 2. During this mixing, additives can be added that are well known to a person skilled in the art, such as flavorings or even dyes.

In an alternative embodiment, the starch/protein mixture is naturally obtained by turboseparation of a leguminous flour or other extraction/purification process. The plant seeds are cleaned, their outer fibers are removed, and they are ground to flour. The flour is then turboseparated, which consists in applying a rising stream of air, enabling the different particles to be separated based on their density.

During step 2, this mixture of powders will then be textured, which is the same as saying that the proteins and fibers will undergo thermal destructuring and reorganization in order to form fibers with continuous elongation in straight, parallel lines, simulating the fibers present in meats. Any method well known to a person skilled in the art will be suitable, in particular extrusion.

Extrusion consists in forcing a product to flow through a small hole, the die, under the action of high pressures and shearing forces, using the rotation of one or two Archimedes screws. The resulting heating causes cooking and/or denaturing of the product, hence the term sometimes used, "extrusion cooking", then expansion by evaporation of the water at the die outlet. This technique makes it possible to develop products which are widely varied in their composition, their structure (expanded and alveolar form of the product), and their functional and nutritional properties (denaturing of anti-nutritional or toxic factors, sterilization of food, for example). Processing of proteins often leads to structural modifications which are reflected by obtaining products with a fibrous appearance, simulating animal meat fibers. Step 2 must be carried out with a water to powder mass ratio before cooking ranging from 10% to 30%, preferably from 12.5% to 25.5%, even more preferably from 15% to 20%. This ratio is obtained by dividing the amount of water by the amount of powder, and by multiplying by 100. Preferably, the water is injected at the end of the feeding zone and immediately before the kneading zone.

Without being bound by any theory, it is well known to a person skilled in the art of extrusion cooking that it is this ratio that will allow the required density to be obtained. The values of this ratio therefore will potentially be 10, 11, 12, 13, 14, 15, 16, 17, 18, 19, 20, 21, 22, 23, 24, 25, 26, 27, 28, 29 or 30%.

Any drinking water is suitable for this purpose. "Drinking water" is understood to mean water that can be drunk or used for domestic and industrial purposes without posing health risks. Preferably, its conductivity is selected from 400 to 1,100, preferably from 400 to 600 µS/cm. More preferably in the present invention, it will be understood that this drinking water has a sulfate content of less than 250 mg/l, a chloride content of less than 200 mg/l, a potassium content of less than 12 mg/l, a pH ranging from 6.5 to 9 and a total hardness (TH, namely the hardness of the water, corresponding to the measurement of the calcium and magnesium ions content in water) of more than 15 French degrees. In other words, drinking water must not have less than 60 mg/l of calcium or 36 mg/l of magnesium. This definition includes water from the drinking water network, decarbonated water, demineralized water.

Preferably, step 2 is carried out by extrusion cooking in a twin-screw extruder characterized by a length to diameter ratio ranging from 20 to 45, preferably from 35 to 45, preferably 40, and equipped with a series of 85-95% feeding elements, 2.5-10% kneading elements, and 2.5-10% reverse pitch elements.

The length to diameter ratio is a conventional parameter in extrusion cooking. This ratio therefore can be 20, 21, 22, 23, 24, 25, 26, 27, 28, 29, 30, 31, 32, 33, 34, 35, 36, 37, 38, 39, 40, 41, 42, 43, 44 or 45.

The various elements are the feeding elements intended for feeding the product into the die without modifying the product, the kneading elements intended for mixing the product and the reverse pitch elements intended for applying a force to the product to cause it to advance in the opposite direction and thus cause mixing and shearing.

Preferably, the feeding elements will be placed at the very beginning of the screw with a temperature set from 20°C to 70°C, then the kneading elements and reverse pitch elements with a temperature ranging from 70°C to 120°C.

Preferably, this screw is rotated from 900 to 1,200 revolutions/min, preferably from 1,000 to 1,100 revolutions/min.

Even more preferably, a specific power ranging from 700 to 800 kj/kg is applied to the powder mixture.

Step 3 then involves cutting the extruded composition at the extruder outlet made up of an outlet die with holes

Cutting can be done only by letting extruded protein exiting the die or also

In a preferred mode, die is fitted by hole with a diameter of 1.5 mm and equipped with a knife, the speed of rotation of which ranges from 1,200 to 1,800 revolutions per minute, or from 2,000 to 2,400 revolutions per minute, preferably around 1,500 revolutions/min.

The knife is placed flush with the outlet of the extruder, preferably at a distance ranging between 0 and 5 mm. "Flush" is understood to be at a distance extremely close to the die located at the outlet of the extruder, at the limit of touching the die but without touching it. Conventionally, a person skilled in the art will adjust this distance by making the knife and the die touch each other, then by shifting the latter very slightly.

The last step 4 involves drying the composition thus obtained.

A person skilled in the art will know how to use the appropriate technology in order to dry the composition according to the invention from the wide selection currently available to them. Without limitation and solely by way of an example, air flow dryers, microwave dryers, fluidized bed dryers or vacuum dryers can be cited. A person skilled in the art will select the correct parameters, mainly the time and temperature, in order to achieve the desired final percentage of dry matter. The final dry matter content of the final extruded composition is seeked to range from 80% to 100%, preferably from 85% to 100%, more preferably from 90% to 100%, or from 95% to 100%.

Finally, the present invention relates to the use of the composition of plant proteins textured in a dry process as indicated above in an industrial application such as, for example, the human and animal food industry products, industrial pharmaceuticals or cosmetics.

The human and animal food industry products are understood to mean industrial confectionery (for example, chocolate, caramel, jelly sweets), bakery products (for example, bread, brioches, muffins), the meat and fish substitutes industry (for example, sausages, hamburgers, fish nuggets, chicken nuggets), sauces substitutes (for example, bolognaise, mayonnaise), substitutes of products derived from milk (for example, cheese, plant milk), beverages (for example, high protein beverages, powdered beverages to be reconstituted).

More preferably, the present invention relates to the use of the composition of plant proteins textured in a dry process as indicated above in the field of baking.

The invention will be of particular interest in order to produce inclusions in bakery products such as muffins, cookies, cakes, bagels, pizza dough, breads and breakfast cereals.

The term "inclusions" is understood to mean particles (in this case the composition of plant proteins textured in a dry process) mixed with a dough before it is cooked. After this step, the composition of plant proteins textured in a dry process is trapped in the final product (hence the term "inclusion") and provides both its protein content as well as crunchiness when consumed.

The invention will be of particular interest in order to produce inclusions in confectionery products such as fat filings, chocolates, so as to also provide protein retention as well as crunchiness.

The invention will be of particular interest in order to produce inclusions in products that are alternatives to dairy products such as cheeses, yogurts, ice creams and beverages.

The invention will be of particular interest in the field of analogs of meat, fish, sauces, soups.

A particular application relates to the use of the composition according to the invention for manufacturing meat substitutes, in particular minced meat, and also bolognaise sauce, steak for hamburgers, meat for tacos and pitta, "Chili sin carne".

In pizzas, the composition comprising textured leguminous proteins according to the invention will be of particular interest for being sprinkled on top of said pizza ("topping").

In dehydrated ready meals (for example, Bolino in Europe or Good Dot in India), the textured composition according to the invention will be used as an element providing fiber and protein. Thus, a product can be obtained that hydrates quickly and to its core, while being pleasing to chew.

The invention will be better understood upon reading the following nonlimiting examples.

### EXAMPLES

### Example 1: Production of a composition of plant proteins textured in a dry process according to the invention

Ingredients to be used:
Pea Protein : Nutralys^{®} F85M
Pea fiber: I50M
Maize starch with high amylose content (more than 70% of amylose on total starch weight): N-400
Waxy maize starch with low amylose content (less than 15% of amylose on total starch weight): N-200
Maize Starch (Medium amylose content around 25%)
Modified starch : Clearam CH 2020 (less than 15% of amylose on total starch weight)
Modified starch : Clearam CH 3020 (less than 15% of amylose on total starch weight)
Modified starch : Clearam CH 4020 (less than 15% of amylose on total starch weight)
Modified starch : Clearam CJ 5025(less than 15% of amylose on total starch weight)

In this study, textured pea protein (TPP) was produced using a standard dry feed mix that consists of 87% of pea protein (F85M) and 13% of pea fiber (I50M) as reference of common textured pea protein currently on the market. Trials below consisted in replacement of pea fiber by different types of starches.

Batch size of approximately 30 pounds was prepared beforehand for this trial run. All the weighed raw dry ingredients were mixed thoroughly in Hobart mixer for 10 min to achieve homogeneous blend. After applying proper setting or putting in the new feed for extruder approximately 15 minutes was given for an extruder to stabilize and give a consistent product output. Order of all runs were randomized to avoid the mechanical error. Once the extruder was stabilized samples were collected and kept in commercial dehydrator system for drying process.

Extruder used was a Coperion ZSK-25 with an L/D = 40. The feed rate for all trial was kept constant at 13.5 kg/hr.

Three different categories of maize starches were used to understand and observe their effect on the water holding capacity (WHC) of the extruded textured pea protein (TPP). These 3 different categories used were maize starch rich in amylose (N400), amylopectin starch poor in amylose also known as waxy maize starch (N200) and lastly maize starch used as standard. High amylose starch had straight chain structure whereas, amylopectin starch had a branched structure. Standard samples of maize starch consist of 25% amylose and 75% amylopectin. Main component of all the sample remains same as control sample that was pea protein (F85M).

Parameters for these trials are summarized in Table 1 below (trials N200 starch and Standard Starch are provided for reference purposes only) :

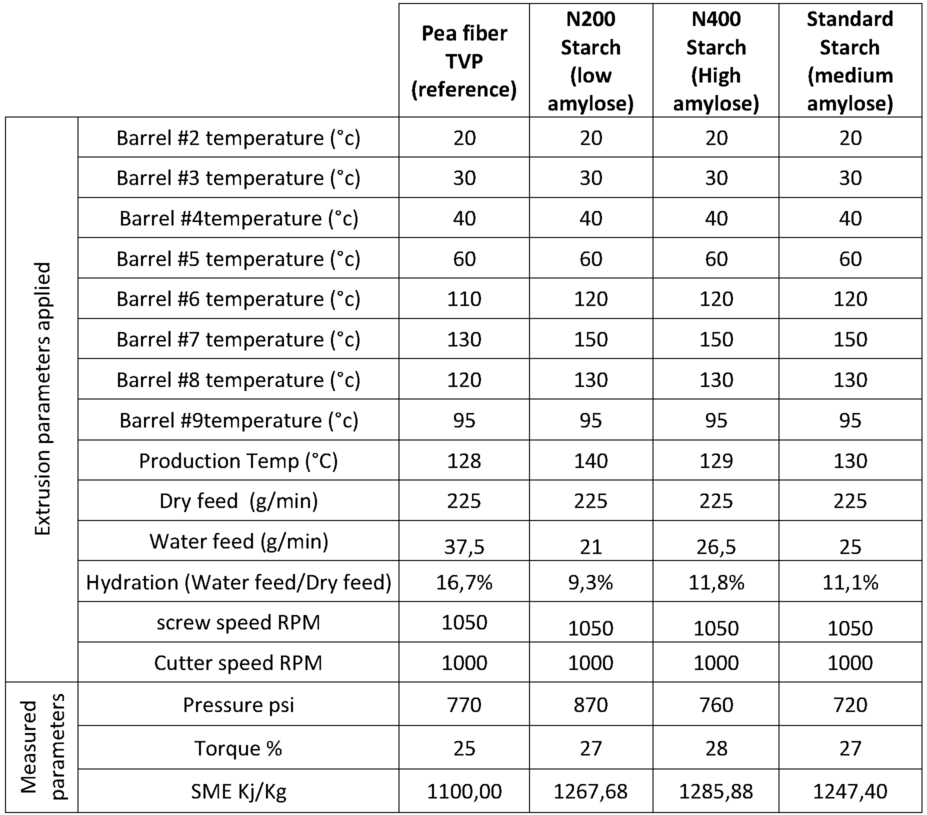

All parameters applied to process extrusion (Temperatures, dry feed, screw feed and cutter speed) are all at same levels. Only water feed has been lowered in order to obtain comparable extruded compositions at the output of extruder, especially in bulk density.

Next trials were focused to see the individual effect of different crosslinked starches. Cross-linked starched are those that undergo a molecular reaction at selected hydroxyl (-OH) groups of two adjoining intact starch molecule. The purpose of cross linking was to enable the starch to withstand such condition as low pH, high shear or high temperature. Starch used were Clearam CH 2020, Clearam CH 3020, Clearam CH 4020, and Clearam CJ 5025.

Parameters for these trials are summarized in Table 2 below (all trials provided for reference purposes only) :

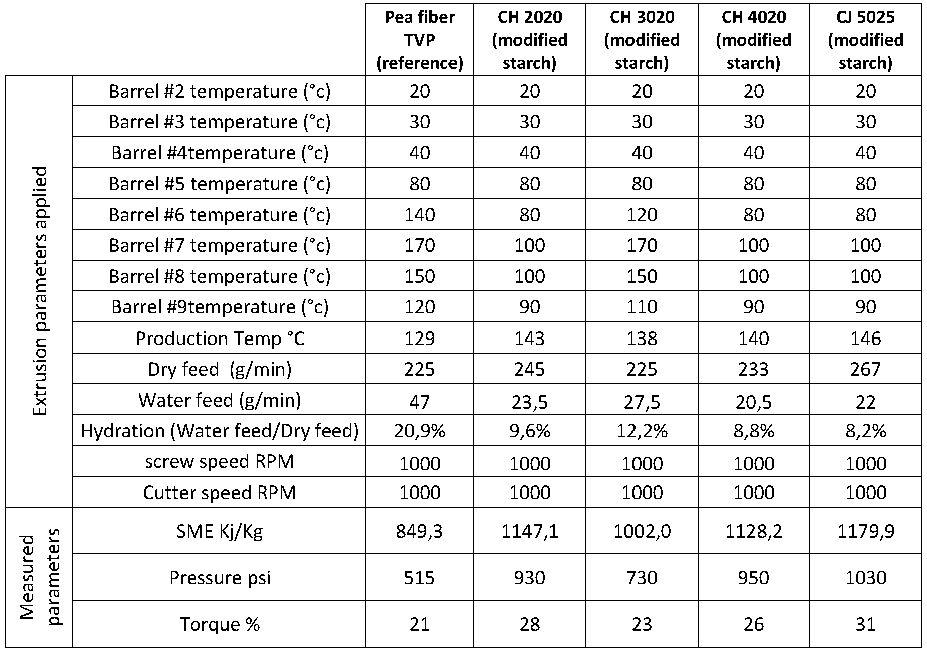

All the collected samples were analysed for bulk density, water holding capacity and textural properties. Textural properties were analysed using a "TA.HD. plus texture analyser" with a flat probe (even surface) and 30kg of force. Measured textural properties are Firmness (force required by machine to deform the sample to 75% strain), Resilience (measurement of how well product fights to regain its original shape and size), Instant spring back (how well a product physically springs back after it has been deformed during the first compression). To reduce the measurement error all the reading for textural properties were collected in triplicates and their average was used.

Results are summarized in Table below (trials Maize starch, N200, CH2020, CH3020, CH4020 and CJ5025 are provided for reference purposes only)

| **Variation** | **Pea fiber (Reference)** | **Maize starch (Standard)** | **N 200** | **N400** | **CH 2020** | **CH 3020** | **CH 4020** | **CJ 5025** |
|---|---|---|---|---|---|---|---|---|
| **bulk Density (g/L)** | 95 | 101 | 85 | 109 | 84 | 120 | 84 | 57 |
| **Water holding Capacity (g/g)** | 3.83 | 2.88 | 2.71 | 2.17 | 2.92 | 3.10 | 3.09 | 3.06 |
| **Average Firmness (g)** | 5965 | 5062 | 5513 | 7243 | 6244 | 5357 | 5255 | 6270 |
| **Resilience Average (%)** | 38.90 | 35.15 | 34.11 | 37.61 | 33.10 | 34.47 | 32.47 | 37.55 |
| **Spring back Average (%)** | 40.44 | 36.24 | 47.64 | 46.87 | 48.15 | 56.91 | 71.47 | 36.78 |

It can be seen that only N400 which is a starch containing more than 30% of amylose can lead to a textured protein composition that have a WHC below 2,5 with density around 100 g/L. This composition has also the highest firmness of all trials. Even modified starches can't give WHC and firmness at these levels.

## Claims

1. An extruded protein composition comprising plant protein-rich material and starch, said starch having an amylose content ranging from 50% to 90% by weight relative to the total weight of the starch,
wherein the extruded protein composition has a protein content ranging from 50% to 75% by dry weight relative to the total weight of dry matter of the composition, and wherein the plant protein-rich material is selected from faba bean and pea.

2. The extruded protein composition according to claim 1, wherein the amylose content of the starch is selected from 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89% and 90% by weight relative to the total weight of the starch.

3. The extruded protein composition according to claim 1 or 2, wherein the plant protein-rich material is pea.

4. The extruded protein composition according to anyone of claims 1 to 3, having a protein content ranging from 65% to 75% by dry weight relative to the total weight of dry matter of the composition.

5. The extruded protein composition according to anyone of claims 1 to 4, having a dry matter content of more than 80%, preferably more than 90%, more preferably from 90% to 95% by weight relative to the total weight of said composition.

6. The extruded protein composition according to anyone claims 1 to 5, wherein said composition possesses a water holding capacity, measured by the Test A, according to the protocol described in the description, below 2,7; preferably below 2,5; preferably below 2,3; preferably below 2,2 and a bulk density, measured by the Test B, according to the protocol described in the description, ranging from 90 g/L and 120 g/L; preferably from 100 g/L to 115 g/L; more preferably from 105 g/L to 115 g/L.

7. A method for producing an extruded protein composition according to claim 1, wherein the extruded protein composition has a protein content ranging from 50% to 75% by dry weight relative to the total weight of dry matter of the composition, the method comprising the following steps:
1) providing a powder comprising plant protein-rich material and starch having amylose content ranging from 50% to 90% by weight relative to the total weight of the starch, wherein the plant protein-rich material is selected from faba bean and pea, said powder having a dry weight ratio of proteins to starch ranging from 70/30 to 90/10, preferably from 85/15 to 90/10;
2) extrusion cooking the powder with water, the water to powder mass ratio before cooking ranging from 1% to 40%, preferably from 10% to 30%, even more preferably from 15% to 25%;
3) cutting the extruded composition at the extruder outlet;
4) drying the composition thus obtained.

8. The method according to claim 7, wherein the plant protein-rich material of step 1 is pea.

9. The method according to claim 7 or 8 **characterized in that** the plant protein-rich material is **characterized by** a protein content ranging from 60% to 90%, preferably from 70% to 85%, even more preferably from 75% to 85% by weight to the total dry matter.

10. The method according to anyone of claims 7 to 9 **characterized in that** amylose content of starch is selected between 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89% and 90% by weight relative to the total weight of the starch.

11. The method according to anyone of claims 7 to 10 **characterized in that** Step 2 is carried out with a water to powder mass ratio before cooking ranging from 10% to 30%, preferably from 12.5% to 25.5%, even more preferably from 15% to 20%.

12. The method according to anyone of claims 7 to 11, wherein step 2 is carried out by extrusion cooking in a twin-screw extruder **characterized by** a length to diameter ratio ranging from 20 to 45, preferably from 35 to 45, preferably 40, and equipped with a series of 85-95% feeding elements, 2.5-10% kneading elements, and 2.5-10% reverse pitch elements.

13. The method according to claim 12, wherein the feeding elements are placed at the very beginning of the screw with a temperature set from 20°C to 70°C, then the kneading elements and reverse pitch elements with a temperature ranging from 70°C to 120°C.

14. The method according to anyone of claims 7 to 13, wherein the extruder screw is rotated from 900 to 1,200 revolutions/min, preferably from 1,000 to 1,100 revolutions/min.

15. The method according to anyone of claims 7 to 14, wherein a specific power ranging from 700 to 800 kj/kg is applied to the powder mixture.

16. The method according to anyone of claims 7 to 15, wherein Step 3 comprises cutting the extruded composition at the extruder outlet made up of an outlet die with holes.

17. The method according to claim 16 wherein the cutting is done only by letting extruded protein exiting the die.

18. The method according to claim 16 wherein the die is fitted with holes having a diameter of 1.5 mm and equipped with a knife, said knife having a speed of rotation from 1,200 to 1,800 revolutions per minute, or from 2,000 to 2,400 revolutions per minute, preferably around 1,500 revolutions/min.

19. The method according to anyone of claims 7 to 18 wherein the final extruded composition has a dry matter content ranging from 80% to 100%, preferably from 85% to 100%, more preferably from 90% to 100%, or 95% and 100% by weight relative to the total weight of said composition.

20. Use of an extruded composition according to anyone of claims 1 to 6 in an industrial application, including food, feed, or specialized nutrition applications.

21. The use according to claim 20 **characterized in that** the food application is chosen among meat substitutes, fish substitutes, sauces or soups, especially meat substitutes, in particular minced meat substitutes, and also bolognaise sauce substitutes, steak substitutes for hamburgers, meat substitutes for tacos and pitta, "Chili sin carne".

## Patentansprüche

1. Extrudierte Proteinzusammensetzung, umfassend pflanzenproteinreiches Material und Stärke, wobei die Stärke einen Amylosegehalt in einem Bereich von 50 Gew.-% bis 90 Gew.-% relativ zu dem Gesamtgewicht der Stärke aufweist,
wobei die extrudierte Proteinzusammensetzung einen Proteingehalt in dem Bereich von 50 Trockengew.-% bis 75 Trockengew.-% relativ zu dem Gesamtgewicht der Trockenmasse der Zusammensetzung aufweist, und wobei das pflanzenproteinreiche Material aus Ackerbohne und Erbse ausgewählt ist.

2. Extrudierte Proteinzusammensetzung nach Anspruch 1, wobei der
Amylosegehalt der Stärke aus 50 Gew.-%, 51 Gew.-%, 52 Gew.-%, 53 Gew.-%,
54 Gew.-%, 55 Gew.-%, 56 Gew.-%, 57 Gew.-%, 58 Gew.-%, 59 Gew.-%,
60 Gew.-%, 61 Gew.-%, 62 Gew.-%, 63 Gew.-%, 64 Gew.-%, 65 Gew.-%,
66 Gew.-%, 67 Gew.-%, 68 Gew.-%, 69 Gew.-%, 70 Gew.-%, 71 Gew.-%,
72 Gew.-%, 73 Gew.-%, 74 Gew.-%, 75 Gew.-%, 76 Gew.-%, 77 Gew.-%,
78 Gew.-%, 79 Gew.-%, 80 Gew.-%, 81 Gew.-%, 82 Gew.-%, 83 Gew.-%,
84 Gew.-%, 85 Gew.-%, 86 Gew.-%, 87 Gew.-%, 88 Gew.-%, 89 Gew.-% und
90 Gew.-% relativ zu dem Gesamtgewicht der Stärke ausgewählt ist.

3. Extrudierte Proteinzusammensetzung nach Anspruch 1 oder 2, wobei das pflanzenproteinreiche Material Erbse ist.

4. Extrudierte Proteinzusammensetzung nach einem der Ansprüche 1 bis 3, die einen Proteingehalt in dem Bereich von 65 Trockengew.-% bis 75 Trockengew.-% relativ zu dem Gesamtgewicht der Trockenmasse der Zusammensetzung aufweist.

5. Extrudierte Proteinzusammensetzung nach einem der Ansprüche 1 bis 4, die einen Trockenmassegehalt von mehr als 80 Gew.-%, vorzugsweise mehr als 90 Gew.-%, mehr bevorzugt von 90 Gew.-% bis 95 Gew.-%, relativ zu dem Gesamtgewicht der Zusammensetzung aufweist.

6. Extrudierte Proteinzusammensetzung nach einem der Ansprüche 1 bis 5, wobei die Zusammensetzung ein Wasserhaltevermögen, gemessen durch den Test A, gemäß dem Protokoll, das in der Beschreibung beschrieben ist, unter 2,7; vorzugsweise unter 2,5; vorzugsweise unter 2,3; vorzugsweise unter 2,2 und eine Schüttdichte, gemessen durch den Test B, gemäß dem Protokoll, das in der Beschreibung beschrieben ist, in dem Bereich von 90 g/L bis 120 g/L; vorzugsweise von 100 g/L bis 115 g/L; mehr bevorzugt von 105 g/L bis 115 g/L aufweist.

7. Verfahren zum Produzieren einer extrudierten Proteinzusammensetzung nach Anspruch 1, wobei die extrudierte Proteinzusammensetzung einen Proteingehalt in dem Bereich von 50 Trockengew.-% bis 75 Trockengew.-% relativ zu dem Gesamtgewicht der Trockenmasse der Zusammensetzung aufweist, das Verfahren umfassend die folgenden Schritte:
1) Bereitstellen eines Pulvers, umfassend pflanzenproteinreiches Material und Stärke, die einen Amylosegehalt in dem Bereich von 50 Gew.-% bis 90 Gew.-% relativ zu dem Gesamtgewicht der Stärke aufweist, wobei das pflanzenproteinreiche Material aus Ackerbohne und Erbse ausgewählt ist, wobei das Pulver ein Trockengewichtsverhältnis von Proteinen zu Stärke in dem Bereich von 70/30 bis 90/10, vorzugsweise von 85/15 bis 90/10, aufweist;
2) Extrusionskochen des Pulvers mit Wasser, wobei das Massenverhältnis von Wasser zu Pulver vor einem Kochen in dem Bereich von 1 % bis 40 %, vorzugsweise von 10 % bis 30 %, noch mehr bevorzugt von 15 % bis 25 %, liegt;
3) Schneiden der extrudierten Zusammensetzung an dem Extruderauslass;
4) Trocknen der so erhaltenen Zusammensetzung.

8. Verfahren nach Anspruch 7, wobei das pflanzenproteinreiche Material aus Schritt 1 Erbse ist.

9. Verfahren nach Anspruch 7 oder 8, **dadurch gekennzeichnet, dass** das pflanzenproteinreiche Material **gekennzeichnet ist durch** einen Proteingehalt in dem Bereich von 60 Gew.-% bis 90 Gew.-%, vorzugsweise von 70 Gew.-% bis 85 Gew.-%, noch mehr bevorzugt von 75 Gew.-% bis 85 Gew.-%, bezogen auf die Gesamttrockenmasse ist.

10. Verfahren nach einem der Ansprüche 7 bis 9,
**dadurch gekennzeichnet, dass** der Amylosegehalt der Stärke zwischen
50 Gew.-%, 51 Gew.-%, 52 Gew.-%, 53 Gew.-%, 54 Gew.-%, 55 Gew.-%,
56 Gew.-%, 57 Gew.-%, 58 Gew.-%, 59 Gew.-%, 60 Gew.-%, 61 Gew.-%,
62 Gew.-%, 63 Gew.-%, 64 Gew.-%, 65 Gew.-%, 66 Gew.-%, 67 Gew.-%,
68 Gew.-%, 69 Gew.-%, 70 Gew.-%, 71 Gew.-%, 72 Gew.-%, 73 Gew.-%,
74 Gew.-%, 75 Gew.-%, 76 Gew.-%, 77 Gew.-%, 78 Gew.-%, 79 Gew.-%,
80 Gew.-%, 81 Gew.-%, 82 Gew.-%, 83 Gew.-%, 84 Gew.-%, 85 Gew.-%,
86 Gew.-%, 87 Gew.-%, 88 Gew.-%, 89 Gew.-% und 90 Gew.-% relativ zu dem Gesamtgewicht der Stärke ausgewählt ist.

11. Verfahren nach einem der Ansprüche 7 bis 10,
**dadurch gekennzeichnet, dass** Schritt 2 mit einem Massenverhältnis von Wasser zu Pulver vor dem Kochen in dem Bereich von 10 % bis 30 %, vorzugsweise von 12,5 % bis 25,5 %, noch mehr bevorzugt von 15 % bis 20 %, durchgeführt wird.

12. Verfahren nach einem der Ansprüche 7 bis 11, wobei Schritt 2 durch Extrusionskochen in einem Doppelschneckenextruder durchgeführt wird, **gekennzeichnet durch** ein Verhältnis von Länge zu Durchmesser in dem Bereich von 20 bis 45, vorzugsweise von 35 bis 45, vorzugsweise 40, und mit einer Reihe von 85-95 % Förderelementen, 2,5-10 % Knetelementen und 2,5-10 % Umkehrgangelementen ausgestattet ist.

13. Verfahren nach Anspruch 12, wobei die Förderelemente ganz am Anfang der Schnecke mit einer von 20 °C bis 70 °C eingestellten Temperatur, dann die Knetelemente und Umkehrgangelemente mit einer Temperatur in dem Bereich von 70 °C bis 120 °C platziert sind.

14. Verfahren nach einem der Ansprüche 7 bis 13, wobei die Extruderschnecke mit 900 bis 1.200 Umdrehungen/min, vorzugsweise mit 1.000 bis 1.100 Umdrehungen/min, gedreht wird.

15. Verfahren nach einem der Ansprüche 7 bis 14, wobei eine spezifische Leistung in dem Bereich von 700 bis 800 kj/kg auf die Pulvermischung angewendet wird.

16. Verfahren nach einem der Ansprüche 7 bis 15, wobei Schritt 3 das Schneiden der extrudierten Zusammensetzung an dem Extruderauslass umfasst, der aus einer Auslassdüse mit Löchern besteht.

17. Verfahren nach Anspruch 16, wobei das Schneiden nur durch Austretenlassen des extrudierten Proteins aus der Düse erfolgt.

18. Verfahren nach Anspruch 16, wobei die Matrize mit Löchern, die einen Durchmesser von 1,5 mm aufweisen, versehen und mit einem Messer ausgestattet ist, wobei das Messer eine Drehzahl von 1.200 bis 1.800 Umdrehungen pro Minute oder von 2.000 bis 2.400 Umdrehungen pro Minute, vorzugsweise etwa 1.500 Umdrehungen/min, aufweist.

19. Verfahren nach einem der Ansprüche 7 bis 18, wobei die endgültige extrudierte Zusammensetzung einen Trockensubstanzgehalt in dem Bereich von 80 Gew.-% bis 100 Gew.-%, vorzugsweise von 85 Gew.-% bis 100 Gew.-%, mehr bevorzugt von 90 Gew.-% bis 100 Gew.-% oder 95 Gew.-% und 100 Gew.-% relativ zu dem Gesamtgewicht der Zusammensetzung, aufweist.

20. Verwendung einer extrudierten Zusammensetzung nach einem der Ansprüche 1 bis 6 in einer industriellen Anwendung, einschließlich Lebensmittel-, Futtermittel- oder Anwendungen spezieller Ernährung.

21. Verwendung nach Anspruch 20, **dadurch gekennzeichnet, dass** die Lebensmittelanwendung aus Fleischersatzprodukten, Fischersatzprodukten, Soßen oder Suppen, speziell Fleischersatzprodukten, insbesondere Hackfleischersatzprodukten, und auch Bolognesesoßenersatzprodukten, Steakersatzprodukten für Hamburger, Fleischersatzprodukten für Tacos und Pita, "Chili sin carne" ausgewählt ist.

## Revendications

1. Composition protéique extrudée comprenant un matériau riche en protéines végétales et de l'amidon, ledit amidon ayant une teneur en amylose allant de 50 % à 90 % en poids par rapport au poids total de l'amidon,
dans laquelle la composition protéique extrudée a une teneur en protéines allant de 50 % à 75 % en poids sec par rapport au poids total de matière sèche de la composition, et dans laquelle le matériau riche en protéines végétales est choisi parmi féverole et pois.

2. Composition protéique extrudée selon la revendication 1, dans laquelle la teneur en amylose de l'amidon est choisie parmi 50 %, 51 %, 52 %, 53 %, 54 %, 55 %, 56 %, 57 %, 58 %, 59 %, 60 %, 61 %, 62 %, 63 %, 64 %, 65 %, 66 %, 67 %, 68 %, 69 %, 70 %, 71 %, 72 %, 73 %, 74 %, 75 %, 76 %, 77 %, 78 %, 79 %, 80 %, 81 %, 82 %, 83 %, 84 %, 85 %, 86 %, 87 %, 88 %, 89 % et 90 % en poids par rapport au poids total de l'amidon.

3. Composition protéique extrudée selon la revendication 1 ou 2, dans laquelle le matériau riche en protéines végétales est le pois.

4. Composition protéique extrudée selon l'une quelconque des revendications 1 à 3, ayant une teneur en protéines allant de 65 % à 75 % en poids sec par rapport au poids total de matière sèche de la composition.

5. Composition protéique extrudée selon l'une quelconque des revendications 1 à 4, ayant une teneur en matière sèche de plus de 80 %, de préférence plus de 90 %, plus préférablement de 90 % à 95 % en poids par rapport au poids total de ladite composition.

6. Composition protéique extrudée selon l'une quelconque des revendications 1 à 5, dans laquelle ladite composition possède une capacité de rétention d'eau, mesurée par le Test A, selon le protocole décrit dans la description, inférieure à 2,7 ; de préférence inférieure à 2,5 ; de préférence inférieure à 2,3 ; de préférence inférieure à 2,2 et une masse volumique apparente, mesurée par le Test B, selon le protocole décrit dans la description, allant de 90 g/L à 120 g/L ; de préférence de 100 g/L à 115 g/L ; plus préférablement de 105 g/L à 115 g/L.

7. Procédé permettant de produire une composition protéique extrudée selon la revendication 1, dans lequel la composition protéique extrudée a une teneur en protéines allant de 50 % à 75 % en poids sec par rapport au poids total de matière sèche de la composition, le procédé comprenant les étapes suivantes :
1) fourniture d'une poudre comprenant un matériau riche en protéines végétales et de l'amidon ayant une teneur en amylose allant de 50 % à 90 % en poids par rapport au poids total de l'amidon, dans lequel le matériau riche en protéines végétales est choisi parmi féverole et pois, ladite poudre ayant un rapport de poids sec des protéines à l'amidon allant de 70/30 à 90/10, de préférence de 85/15 à 90/10 ;
2) cuisson-extrusion de la poudre avec de l'eau, le rapport massique de l'eau à la poudre avant cuisson allant de 1 % à 40 %, de préférence de 10 % à 30 %, même plus préférablement de 15 % à 25 % ;
3) découpe de la composition extrudée au niveau de la sortie d'extrudeuse ;
4) séchage de la composition ainsi obtenue.

8. Procédé selon la revendication 7, dans lequel le matériau riche en protéines végétales de l'étape 1 est le pois.

9. Procédé selon la revendication 7 ou 8 **caractérisé en ce que** le matériau riche en protéines végétales est **caractérisé par** une teneur en protéines allant de 60 % à 90 %, de préférence de 70 % à 85 %, même plus préférablement de 75 % à 85 % en poids par rapport à la matière sèche totale.

10. Procédé selon l'une quelconque des revendications 7 à 9 **caractérisé en ce que** la teneur en amylose de l'amidon est choisie entre 50 %, 51 %, 52 %, 53 %, 54 %, 55 %, 56 %, 57 %, 58 %, 59 %, 60 %, 61 %, 62 %, 63 %, 64 %, 65 %, 66 %, 67 %, 68 %, 69 %, 70 %, 71 %, 72 %, 73 %, 74 %, 75 %, 76 %, 77 %, 78 %, 79 %, 80 %, 81 %, 82 %, 83 %, 84 %, 85 %, 86 %, 87 %, 88 %, 89 % et 90 % en poids par rapport au poids total de l'amidon.

11. Procédé selon l'une quelconque des revendications 7 à 10 **caractérisé en ce que** l'Étape 2 est effectuée avec un rapport massique de l'eau à la poudre avant cuisson allant de 10 % à 30 %, de préférence de 12,5 % à 25,5 %, même plus préférablement de 15 % à 20 %.

12. Procédé selon l'une quelconque des revendications 7 à 11, dans lequel l'étape 2 est effectuée par cuisson-extrusion dans une extrudeuse à vis jumelées **caractérisé par** un rapport de la longueur au diamètre allant de 20 à 45, de préférence de 35 à 45, de préférence de 40, et équipée d'une série de 85 à 95 % d'éléments d'alimentation, 2,5 à 10 % d'éléments de malaxage, et 2,5 à 10 % d'éléments à pas inversé.

13. Procédé selon la revendication 12, dans lequel les éléments d'alimentation sont placés tout au début de la vis avec une température réglée de 20 °C à 70 °C, puis les éléments de malaxage et les éléments à pas inversé avec une température allant de 70 °C à 120 °C.

14. Procédé selon l'une quelconque des revendications 7 à 13, dans lequel la vis d'extrudeuse est mise en rotation de 900 à 1200 révolutions/min, de préférence de 1000 à 1100 révolutions/min.

15. Procédé selon l'une quelconque des revendications 7 à 14, dans lequel une puissance spécifique allant de 700 à 800 kJ/kg est appliquée au mélange de poudre.

16. Procédé selon l'une quelconque des revendications 7 à 15, dans lequel l'Étape 3 comprend la découpe de la composition extrudée au niveau de la sortie d'extrudeuse constituée d'une matrice de sortie pourvue de trous.

17. Procédé selon la revendication 16 dans lequel la découpe est faite uniquement en laissant la protéine extrudée sortir de la matrice.

18. Procédé selon la revendication 16 dans lequel la matrice est pourvue de trous ayant un diamètre de 1,5 mm et est équipée d'un couteau, ledit couteau ayant une vitesse de rotation allant de 1200 à 1800 révolutions par minute, ou de 2000 à 2400 révolutions par minute, de préférence environ 1500 révolutions/min.

19. Procédé selon l'une quelconque des revendications 7 à 18 dans lequel la composition extrudée finale a une teneur en matière sèche allant de 80 % à 100 %, de préférence de 85 % à 100 %, plus préférablement de 90 % à 100 %, ou 95 % et 100 % en poids par rapport au poids total de ladite composition.

20. Utilisation d'une composition extrudée selon l'une quelconque des revendications 1 à 6 dans une application industrielle, y compris des applications d'alimentation humaine, d'alimentation animale ou de nutrition spécialisée.

21. Utilisation selon la revendication 20 **caractérisée en ce que** l'application d'alimentation humaine est choisie parmi substituts de viande, substituts de poisson, sauces ou soupes, en particulier substituts de viande, en particulier substituts de viande hachée, ainsi que substituts de sauce bolognaise, substituts de steak pour hamburgers, substituts de viande pour tacos et pitas, « chili sin carne ».
